# EUROPEAN PATENT SPECIFICATION

(11) **EP 1 210 573 B1**
(45) Date of publication and mention of the grant of the patent: **15.10.2003**
(21) Application number: 00954750.6
(22) Date of filing: 21.08.2000
(51) Int. Cl.: G01L 9/10, G01L 7/16, G01L 13/02

(54) **PISTON TYPE PRESSURE TRANSDUCER**
KOLBEN-DRUCKWANDLER
TRANSDUCTEUR DE PRESSION DE TYPE PISTON

(30) Priority: 20.08.1999 GB 9919814
(43) Date of publication of application: 05.06.2002
(73) Proprietor: Smiths Wolverhampton Limited, Wolverhampton WV9 5EW (GB)
(72) Inventor: MOUNTNEY, Arthur, Derek, Telford, Shropshire TF2 6RQ (GB); THOMAS, Glynn, Penkridge, Staffordshire ST19 5SU (GB)
(74) Representative: Hogg, Jeffery Keith
(86) International application number: GB0003240
(87) International publication number: WO01014841

(56) References cited:
- DE-A- 2 425 687
- PATENT ABSTRACTS OF JAPAN vol. 013, no. 465 (M-882), 20 October 1989 (1989-10-20) & JP 01 182165 A (JIDOSHA KIKI CO LTD), 20 July 1989 (1989-07-20)

## Description

### Technical Field

This application relates to fluid pressure operated transducers.
A known transducer responsive to a fluid pressure differential in a system comprises a piston located in a cavity between two compression springs, and the pressure differential is applied across the piston and causes it to move from an equilibrium position determined by the balanced condition of the springs. The displacement of the piston provides an indication of the pressure differential. A disadvantage of this kind of transducer is that the springs abutting the faces of the piston can cause the piston to tilt and generate lateral forces on the side wall of the cavity which lead to inaccurate operation or seizure of the transducer. An object of the present invention is to provide a transducer in which this disadvantage is reduced or overcome.

PATENT ABSTRACTS OF JAPAN vol. 013, no. 465 (M-882), 20 October 1989 & JP 01 182165 A (JIDOSHA KIKI CO LTD), 20 July 1989 shows a transducer comprising a piston arranged in a cavity, centering means for centering the piston longitudinally in the cavity, fluid input means opening into the cavity on each side of the piston such that the piston moves longitudinally in the cavity in response to a pressure differential applied across the piston via the fluid input means, and sensing means for sensing longitudinal displacement of the piston, wherein the centering means comprises resilient means in the form of springs located longitudinally to each side of the piston.

### Disclosure of the Invention

According to a first aspect, the invention consists in a transducer comprising a piston arranged in a cavity, centering means for centering the piston longitudinally in the cavity, fluid input means opening into the cavity on each side of the piston such that the piston moves longitudinally in the cavity in response to a pressure differential applied across the piston via the fluid input means, and sensing means for sensing longitudinal displacement of the piston, wherein the centering means comprises resilient means located longitudinally to each side of the piston and acting on the piston via a respective tensioned tie.

A transducer of the kind just described is simpler and more stable than the prior art transducers.

In a preferred embodiment. the tensioned ties are substantially on the axis of the piston and extend from the piston to terminate in a retaining member.

Each resilient means can be a spring located between the piston and the retaining member of a respective tie. Each resilient means can engage the retaining member of its respective tie and a retaining surface, such that the resilient means is compressed thereby tensioning the tie.

For each tie, the retaining member, the resilient means, and the retaining surface, can all be outside the cavity. Alternatively, these components may be located within the cavity.

In the case where the resilient means is a spring, it may comprise a helical coil wound about the tie and abutting the retaining member.

The ties can be rods which extend axially from respective faces of the piston.

The piston can be a double piston which presents a different working area to each side of the cavity.

In one embodiment, the sensing means senses motion of one of the ties. A portion of the tie extends within an arrangement of coils comprising primary and secondary windings, the tie acting like a transformer core and its motion affecting the mutual inductance between the primary and secondary coils, producing a measurable charge in the current in the secondary coil.

In a preferred embodiment, the pressures provided to the cavity via the fluid input means come from each side of a piston in a hydraulic actuator (such as may be used for positioning a control surface of an aircraft). In this case, the pressures provided to the transducer can be indicative of the load on, or displacement of, the hydraulic actuator.

### Description of the Drawings

Two embodiments of the invention will now be described by way of example only, and with reference to the accompanying drawings, in which:
Figure 1 shows a transducer for sensing the pressures within an hydraulic actuator having equal areas on oppositc sides of the piston; and
Figure 2 shows a transducer for sensing the pressures associated with an actuator which does not have equal areas on opposite sides of the piston.

### Description of Mode of carrying out the Invention

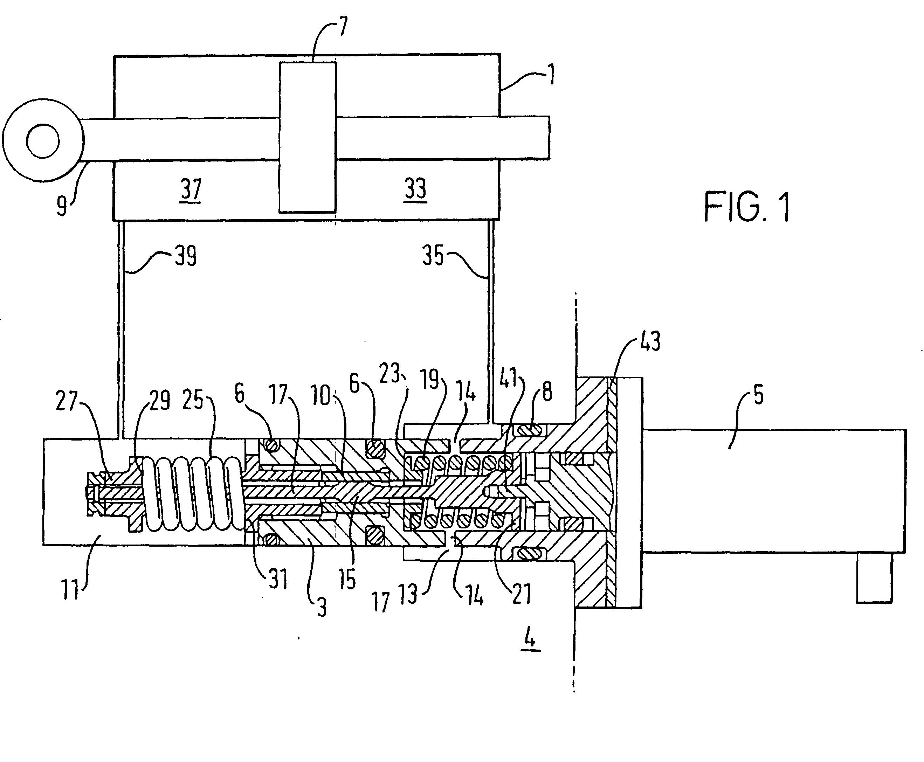

Figure 1 shows a hydraulic actuator 1, the operating pressures of which are sensed by pressure-to-motion transducer 3 and motion-to-voltage transducer 5. The hydraulic actuator comprises a piston 7 in a housing. The pressures on either side of piston 7 can be varied to adjust its position, and consequently also the position of rod 9 which is connected to the positon. Rod 9 is effective to move, for example, a control surface of an aircraft. Several hydraulic actuators of this type are sometimes used to control movement of a single control surface or other element. The situation can arise where these hydraulic actuators are competing against one another (force fight) and this can result in undesirable stress on the control surface. Therefore, in order to guard against such force fight conditions, the pressures within the hydraulic actuators, which relate to actuator load, are sensed.

Pressure-to-motion transducer 3 is used to sense the pressures within the hydraulic actuator 1. Transducer 3 is inserted into a bore in a body 4 which is in fluid communication with each side of piston 7. The fluid connections will be described later. The transducer 3 comprises two chambers 11 and 13 separated by piston 15. The two chambers 11 and 13 are defined in part by the bounding surfaces of the bore in body 4. Sealing rings 6 isolate the chambers I 1 and 13 from one another, and sealing ring 8 isolates chamber 13 from the external environment. A bushing 10 is provided in the region of piston 15. A close clearance between the piston 15 and bushing 10 provides a sufficient degree of sealing around the piston 15 without excessive friction.

A rod 17 extends from either side of the piston into the chambers 11 and 13. As shown, chamber 13 opens out into a section having a larger bore which accommodates a spring 19. The spring 19 acts against retaining member 21 at the end of rod 17 in chamber 13 and against surface 23 of chamber 13. On the other side of the piston 15, rod 17 extends through a spring 25 in chamber 11 and terminates in adjuster 27. The spring 25 acts against the inner face 29 of the adjuster 27 and against surface 31 of the housing of transducer 3. The springs 19 and 25 are effective to bias adjuster 27 and retaining member 21 away from piston 15, thus placing rod 17 in tension and also tending to centre a piston 15 to an equilibrium position in bushing 10 between the two chambers 11 and 13.

Chamber .13 is placed in fluid communication with region 33 of hydraulic actuator 1 by means of fluid line 35, and, similarly, region 37 of hydraulic actuator 1 is in fluid communication with chamber 11 of the transducer 3 by means of fluid line 39. It will be noted that chamber 13 exposes one face of piston 15 to the pressure within region 33 by means of holes 14 in the housing of the transducer 3. In this embodiment, opposite faces of the piston 15 present equal areas to chambers 11 and 13 in the same way that opposite faces of the piston 7 present equal areas to the regions 33 and 37 of the actuator 1. Therefore, if the pressure in region 33 of actuator 1 is higher than the pressure in region 37, then the pressure in chamber 13 of transducer 3 will be higher than the pressure in chamber I 1 and piston 15 will move in the direction of chamber 11 until the forces in the transducer reach equilibrium.

The motion of piston 15 and rod 17 is sensed using motion-to-voltage transducer 5. A rod (not shown) is screwed into axial recess 41 in retaining member 21 and extends into motion-to-voltage transducer 5, which comprises an arrangement comprising primary and secondary coils wound on the same former and both being coaxial with the rod projecting from recess 41. Motion of the piston 15 causes motion of the rod fitted into recess 41 and lying within the axial space in the primary and secondary coils. Movement of the rod causes a change in the mutual inductance between the coils causing a change in the current in the secondary coil which can be sensed. Preferably, the rod is made from magnetically soft iron to enhance changes in the mutual inductance. The rod extends within an isolation tube (not shown) which places the space around the rod in fluid communication with the other portions of chamber 13 and yet isolates the rod from fluid communication with the space within transducer 5 which contains the primary and secondary coils. The rod is capable of relative motion with respect to the isolation tube. The signal output by the secondary coil is related to the movement of piston 15 which, in turn, is related to the pressures in the hydraulic actuator 1.

It will be clear to the person skilled in this art that means other than motion-to-voltage transducer 5 could be used for measuring motion and displacement of piston 15.

Both of the transducers 3 and 5 can be adjusted for calibration or other purposes. Adjuster 27 is attached to rod 17 by a threaded arrangement which allows the distance between piston 15 and the inner surface 29 of the adjuster 27 to be varied. Similarly, there is a setting shim 43 provided in the connection between transducers 3 and 5 which can be adjusted to vary the extent to which the rod from recess 41 extends into transducer 5.

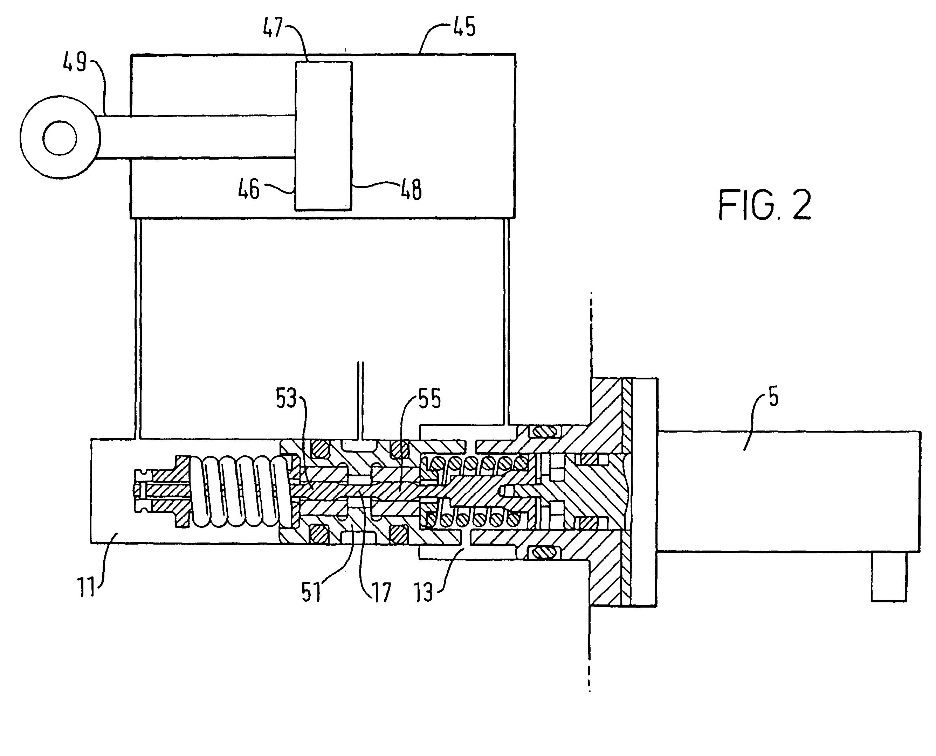

Figure 2 shows a hydraulic actuator 45 connected to a sensing arrangement comprising a pressure-to-motion transducer and a motion-to-voltage transducer. The arrangement shown in Figure 2 is largely similar to the arrangement shown in Figure 1 and only the key differences are described below.

Hydraulic actuator 45 comprises piston 47 which does not present faces of equal surface area. Thus, if there were equal pressures on each side of piston 47, then piston 47 will move so as to extend the rod 49 from the actuator 45 (the force on the face of a piston being proportional to the product of the working area of the piston face and the pressure on the piston face). Therefore, it will be seen that in a no-load configuration, the rod 49 and piston 47 of actuator 45 will be held in a steady position when the pressures on either side of piston 47 differ by a certain, non-zero, amount (dependent on the dimensions of actuator 45). Thus, if it is desired for the pressure-to-motion transducer to assume its equilibrium position for the no-load condition rather than the equal pressure condition, then the pressure-to-motion transducer 51 needs to take into account the fact that the pressures within actuator 45 are not equal in the no-load condition.

To achieve this, transducer 51 is provided with a small piston 53 in a sleeve facing chamber 11, and a large piston 55 in a sleeve facing chamber 13. The small piston 53 presents a smaller working face to chamber 11 than the larger piston 55 presents to chamber 13. Since force is proportional to the product of working area and pressure, the areas of the working faces of the small and large pistons 53 and 55 (i.e. those faces exposed to the chambers 11 and 13) are selected such that the ratio of the working area of piston 53 to that of piston 55 is the same as the ratio of the working area of face 46 of piston 47 to face 48. Thus, the transducers 51 and 5 give a measure of the load on rod 49 for any combination of pressures on each side of piston 47.

In other key respects, the transducer 52 shown in Figure 2 is like that shown in Figure 1.

Transducer 5 shown in Figure 2 can be the same as transducer 5 shown in Figure 1.

The transducers described above may be implemented with floating piston housings to minimise frictional effects.

## Claims

1. A transducer comprising a piston (15) arranged in a cavity, centering means for centering the piston longitudinally in the cavity, fluid input means (39,35) opening into the cavity on each side of the piston such that the piston moves longitudinally in the cavity in response to a pressure differential applied across the piston via the fluid input means, and sensing means (5) for sensing longitudinal displacement of the piston, wherein the centering means comprises resilient means (25,19) located longitudinally to each side of the piston and acting on the piston via a respective tensioned tie.

2. A transducer according to claim 1, wherein at least one of the ties extends along, substantially, the longitudinal axis of the piston.

3. A transducer according to claim 1 or 2, wherein at least one of the ties extends from the piston to a retaining member (21).

4. A transducer according to claim 3, wherein one of the resilient means extends from the retaining means.

5. A transducer according to claim 4, wherein said one of the resilient means extends to a retaining surface.

6. A transducer according to claim 5 wherein the retaining member, the resilient means and the retaining surface are all within the cavity.

7. A transducer according to claim 6, wherein the retaining member, the resilient means and the retaining surface are all outside the cavity.

8. A transducer according to any preceding claim, wherein the piston is a double piston.

9. A transducer according to claim 8, wherein the double piston presents a different working area to each side of the cavity.

10. A transducer according to any preceding claim, wherein the sensing means is arranged to sense motion of one of the ties.

11. A hydraulic system comprising a hydraulic activator and a transducer according to any one of the preceding claims arranged to sense the load on the actuator.

## Patentansprüche

1. Wandler, welcher einen in einem Hohlraum angeordneten Kolben (15), eine Zentriereinrichtung zum Zentrieren des Kolbens in Längsrichtung in dem Hohlraum, eine Fluideingabeeinrichtung (39, 35), welche in dem Hohlraum auf jeder Seite des Kolbens derart einmündet, daß sich der Kolben in Längsrichtung im Hohlraum in Abhängigkeit von einer auf den Kolben über die Fluideingabeeinrichtung einwirkenden Druckdifferenz anspricht, und eine Sensoreinrichtung (5) zum Erfassen der Längsverschiebung des Kolbens aufweist, wobei die Zentriereinrichtung eine federnde Einrichtung (25, 19) aufweist, die in Längsrichtung auf jeder Seite des Kolbens angeordnet ist, und auf den Kolben über eine zugeordnete Spannstange einwirkt.

2. Wandler nach Anspruch 1, bei dem wenigstens eine der Stangen im wesentlichen längs der Längsachse des Kolbens verläuft.

3. Wandler nach Anspruch 1 oder 2, bei dem wenigstens eine der Stangen von dem Kolben zu einem Halteelemente (21) verläuft.

4. Wandler nach Anspruch 3, bei dem eine der Federeinrichtungen von der Halteeinrichtung weg verläuft.

5. Wandler nach Anspruch 4, bei dem eine der Federeinrichtungen zu einer Haltefläche verläuft.

6. Wandler nach Anspruch 5, bei dem das Halteelemente, die Federeinrichtung und die Haltefläche alle in dem Hohlraum liegen.

7. Wandler nach Anspruch 6, bei dem das Halteelement, die Federeinrichtung und die Haltefläche aller außerhalb des Hohlraums liegen.

8. Wandler nach einem der vorangehenden Ansprüche, bei dem der Kolben ein Doppelkolben ist.

9. Wandler nach Anspruch 8, bei dem der Doppelkolben auf jeder Seite des Hohlraums eine unterschiedliche Arbeitsfläche aufweist.

10. Wandler nach einem der vorangehenden Ansprüche, bei dem die Sensoreinrichtung zur Erfassung der Bewegung einer der Stangen angeordnet ist.

11. Hydraulische Anlage, welche eine hydraulische Beaufschlagungseinrichtung und einen Wandler nach einem der vorangehenden Ansprüche aufweist, welcher zur Erfassung der Belastung auf die Beaufschlagungseinrichtung angeordnet ist.

## Revendications

1. Transducteur comprenant un piston (15) placé dans une cavité, un dispositif de centrage du piston longitudinalement dans la cavité, un dispositif (39, 35) d'entrée de fluide qui débouche dans la cavité de part et d'autre du piston de manière que le piston se déplace longitudinalement dans la cavité sous l'action d'une différence des pressions appliquées de part et d'autre du piston par le dispositif d'entrée de fluide, et un dispositif de détection (5) destiné à détecter le déplacement longitudinal du piston, dans lequel le dispositif de centrage comporte un dispositif élastique (25, 19) disposé longitudinalement de chaque côté du piston et agissant sur le piston par un lien respectif sous tension.

2. Transducteur selon la revendication 1, dans lequel l'un au moins des liens s'étend pratiquement suivant l'axe longitudinal du piston.

3. Transducteur selon la revendication 1 ou 2, dans lequel l'un des liens au moins s'étend d'un piston à un organe de retenue (21).

4. Transducteur selon la revendication 3, dans lequel l'un des dispositifs élastiques s'étend depuis le dispositif de retenue.

5. Transducteur selon la revendication 4, dans lequel l'un des dispositifs élastiques s'étend vers une surface de retenue.

6. Transducteur selon la revendication 5, dans lequel l'organe de retenue, le dispositif élastique et la surface de retenue sont tous placés dans la cavité.

7. Transducteur selon la revendication 6, dans lequel l'organe de retenue, le dispositif élastique et la surface de retenue sont tous en dehors de la cavité.

8. Transducteur selon l'une quelconque des revendications précédentes, dans lequel le piston est un piston double.

9. Transducteur selon la revendication 8, dans lequel le piston double présente une section différente de travail de part et d'autre de la cavité.

10. Transducteur selon l'une quelconque des revendications précédentes, dans lequel le dispositif de détection est destiné à détecter le déplacement de l'un des liens.

11. Système hydraulique comprenant un actionneur hydraulique et un transducteur selon l'une quelconque des revendications précédentes, destiné à détecter la charge de l'actionneur.
